# EUROPEAN PATENT APPLICATION

(11) **EP 3 106 545 A1**
(43) Date of publication of application: **21.12.2016**
(21) Application number: 14885722.0
(22) Date of filing: 18.03.2014
(51) Int. Cl.: C25D 7/00, B22F 1/02

(54) **CAPACITIVE METAL POROUS BODY-FORMING APPARATUS AND CAPACITIVE METAL POROUS BODY-FORMING METHOD USING SAME**

(30) Priority: 14.03.2014 KR 20140030498
(71) Applicant: Alantum Co. Ltd., Seongnam-si, Gyeonggi-do 462-809 (KR)
(72) Inventor: CHOI, Byoung Kwon, Daejeon 305-756 (KR); LEE, Chang Woo, Guri-si Gyeonggi-do 471-734 (KR); YU, Seung Woon, Namyangju-si Gyeonggi-do 472-789 (KR); PARK, Man Ho, Seoul 157-882 (KR); BAE, Jung Suk, Seoul 121-897 (KR)
(74) Representative: Manitz, Finsterwald & Partner GbR
(86) International application number: PCT/KR2014/002280
(87) International publication number: WO 2015/137546

(57) **Abstract**

An exemplary embodiment of the present invention provides an electrostatic metal porous body forming apparatus including: a transfer module transferring a porous body substrate; and a coating module coating a metal powder on the porous body substrate, wherein the transfer module includes a substrate supporter fixing the porous body substrate while the porous body substrate is transferred, and wherein the coating module includes: an electrifier including a first electrode electrifying the metal powder, a second electrode facing the first electrode, a first power supplier connected with the first electrode supplying electricity to the first electrode, and a second power supplier connected with the second electrode supplying electricity electrified with an opposite charge to a charge caused by the electrification of the first electrode to the second electrode, and generating a pulse type of voltage; and a metal powder supplier including a metal powder vessel storing the metal powder therein and supplying the metal powder to the outside, and an outlet separately disposed above or below the porous body substrate injecting the metal powder, and transferring or injecting the metal powder that is electrified and coated by the electrifier.

## Description

### [Technical Field]

This specification relates to an electrostatic metal porous body forming apparatus and an electrostatic metal porous body forming method using the same.

### [Background Art]

A porous body substrate having an open-cell structure may be coated with a metal powder containing an additional alloy component. Accordingly, its mechanical characteristic may be improved, while an effect such as separation or filtration may be lowered. Resultantly, surface roughness obtained from internal surfaces of fine pores and webs may be insufficient for a desired effect such as separation or filtration.

To solve this problem, an adequate surface coating method may be performed. For example, chemical vapor deposition (CVD) or physical vapor deposition (PVD) may be performed. However, in the case of using CVD, the metal powder is non-uniformly coated such that it is not easy to perform a forming process in a general open-porous volume. The well-known PVD or CVD coating process is restricted in a depth of penetration into a porous foam structure, and may require a considerable manufacturing cost.

### [DISCLOSURE]

### [Technical Problem]

The present invention has been made in an effort to provide an electrostatic metal porous body forming apparatus capable of forming a metal porous body at a high speed and with high efficiency and reducing environmental contamination.

The present invention has been made in an effort to provide an electrostatic metal porous body forming apparatus capable of improving coating efficiency and coating quality and capable of facilitating mass production.

The present invention has been made in an effort to provide an electrostatic metal porous body forming method improving coating efficiency and coating quality and capable of facilitating mass production.

### [Technical Solution]

Exemplary embodiments may be used to achieve other objects which are not specifically stated, in addition to the above objects.

An exemplary embodiment of the present invention provides an electrostatic metal porous body forming apparatus including: a transfer module transferring a porous body substrate; and a coating module coating a metal powder on the porous body substrate, wherein the transfer module includes a substrate supporter fixing the porous body substrate while the porous body substrate is transferred, and wherein the coating module includes: an electrifier including a first electrode electrifying the metal powder, a second electrode facing the first electrode, a first power supplier connected with the first electrode supplying electricity to the first electrode, and a second power supplier connected with the second electrode supplying electricity electrified with an opposite charge to a charge caused by the electrification of the first electrode to the second electrode, and generating a pulse type of voltage; and a metal powder supplier including a metal powder vessel storing the metal powder therein and supplying the metal powder to the outside, and an outlet separately disposed above or below the porous body substrate injecting the metal powder, and transferring or injecting the metal powder that is electrified and coated by the electrifier.

The coating module may include a binder supplier coating a binder on the porous body substrate, and the binder supplier may include a binder solution vessel storing the binder therein and supplying the binder to the outside, and an outlet separately disposed above or below the porous body substrate injecting the binder.

The coating module may include an electrifier including a first electrode electrifying the binder, a second electrode facing the first electrode, a first power supplier connected with the first electrode supplying electricity to the first electrode, and a second power supplier connected with the second electrode supplying electricity electrified with an opposite charge to a charge caused by the electrification of the first electrode.

The outlet may include a first outlet separately disposed above the porous body substrate transferred by the substrate supporter, and the porous body substrate providing a coated surface, and a second outlet separately disposed below the porous body substrate transferred by the substrate supporter, and the porous body substrate providing a coated surface.

The coating module includes a vacuum generator generating a negative pressure gas flow.

The transfer module may include a transfer sensor disposed on a transfer path of the porous body substrate, and the transfer sensor controls transfer of the porous body substrate.

The porous body substrate may include an open cell type foam having a 3D network structure or a honeycomb structure.

The metal powder supplier may include a gas supplier supplying a gas that is mixed in a flow of the metal powder supplied from the metal powder vessel, and a heater heating the gas supplied from the gas supplier.

The binder supplier may include a gas supplier supplying a gas that is mixed in a flow of the binder supplied from the binder solution vessel, and a heater heating the flow of the binder or the gas supplied from the gas supplier.

The metal powder supplier may include a cover surrounding the outlet or being separated from an opposite surface to a coated surface of the porous body substrate to prevent leakage of the metal powder to the outside.

The binder supplier may include a cover surrounding the outlet or being separated from an opposite surface to a coated surface of the porous body substrate to prevent leakage of the binder to the outside.

The electrodes may be of a wire type.

The metal powder supplier may include a gas fluidifying device disposed between the metal powder vessel and the outlet fluidifying the metal powder supplied from the metal powder vessel.

The coating module may include a circulator including a cyclone and a filter recovering the metal powder that is not coated.

The coating module may include a circulator including a binder recovering pump providing a pressure for recovering the binder that is not coated.

An exemplary embodiment of the present invention provides an electrostatic metal porous body forming method including: supplying a porous body substrate to an inside of the electrostatic metal porous body forming apparatus; electrifying a metal powder under an electric field; and coating the electrified metal powder on the porous body substrate supplied from the electrostatic metal porous body forming apparatus by applying a pulse type of voltage.

The electrostatic metal porous body forming method may further include coating a binder on the porous body substrate, before coating the metal powder on the porous body substrate.

The electrostatic metal porous body forming method may further include electrifying the binder under an electric field, before coating the binder on the porous body substrate, and the coating of the binder on the porous body substrate may include coating the electrified binder on the porous body substrate by applying a voltage.

The electric field may be generated around an electrode by electricity supplied from a first power supplier, and a voltage magnitude of the electricity may be in a range of 10 to 150 kV.

Electrification of at least one of the metal powder and the binder may be performed by using a corona method, a method using an ion implanter, or a method using a plasma ionizer.

### [Advantageous Effects]

According to the exemplary embodiments, an electrostatic metal porous body forming apparatus and a metal porous body forming method using the same forming a metal porous body at a high speed and with high efficiency and reducing environmental contamination may be provided. Further, it is possible to minimize an amount of the metal powder that is wasted and to form a uniform coating layer, to accomplish high coating efficiency and coating quality.

### [Description of the Drawings]

FIG. 1 is a schematic diagram illustrating a whole part of an electrostatic metal porous body forming apparatus based on a binder supplier according to an exemplary embodiment.
FIG. 2 is a schematic diagram illustrating a whole part of an electrostatic metal porous body forming apparatus based on a metal powder supplier according to an exemplary embodiment.
FIG. 3(a) to (c) are a top plan view of a sheet-like porous body substrate, a cross-sectional side view thereof, and an enlarged view of an edge portion thereof, respectively, according to an exemplary embodiment.
FIG. 4 (a) is a schematic view of a sheet-like porous body substrate according to an exemplary embodiment, and FIG. 4 (b) is a schematic view illustrating the sheet-like porous body substrate that is fixed by a substrate supporter.
FIG. 5 is a schematic diagram illustrating a substrate supporter and a transfer sensor in a transfer module according to an exemplary embodiment.
FIG. 6 is a flowchart illustrating an electrostatic metal porous body forming method according to an exemplary embodiment.
FIG. 7 a to d are enlarged photographs illustrating a metal porous body manufactured by an electrostatic metal porous body forming apparatus and photographs illustrating an incision surface according to an exemplary embodiment.

### [Mode for Invention]

The present disclosure will be described more fully hereinafter with reference to the accompanying drawings, in which exemplary embodiments of the disclosure are shown. As those skilled in the art would realize, the described embodiments may be modified in various different ways, all without departing from the spirit or scope of the present invention. The drawings and description are to be regarded as illustrative in nature and not restrictive. Like reference numerals designate like elements throughout the specification.

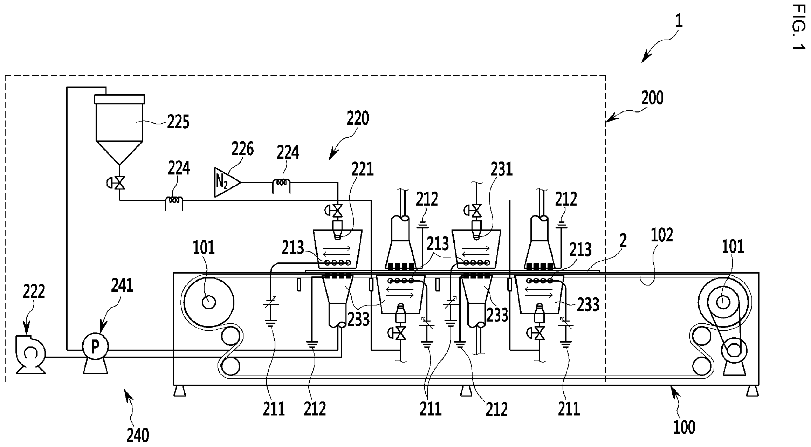

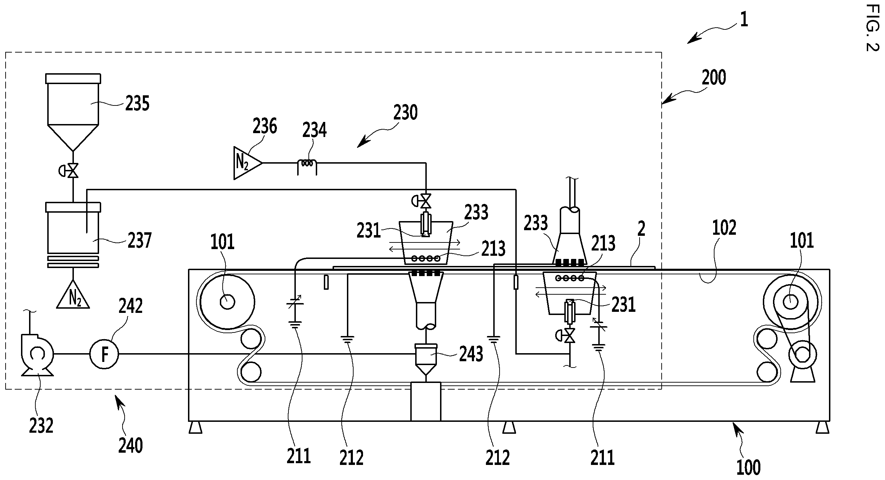

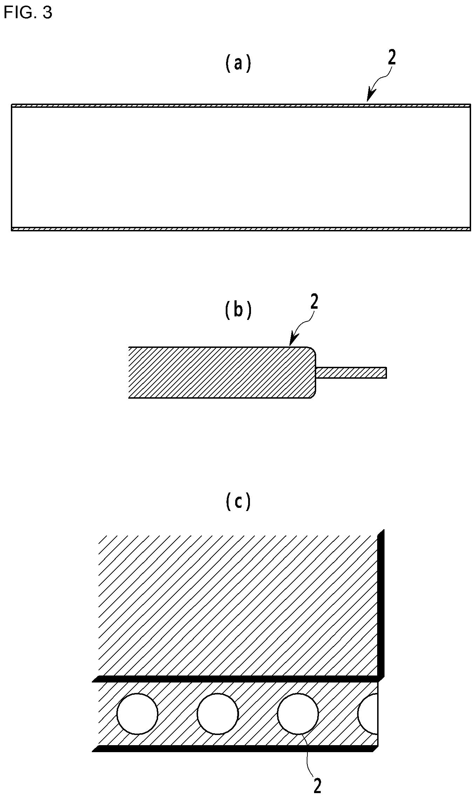

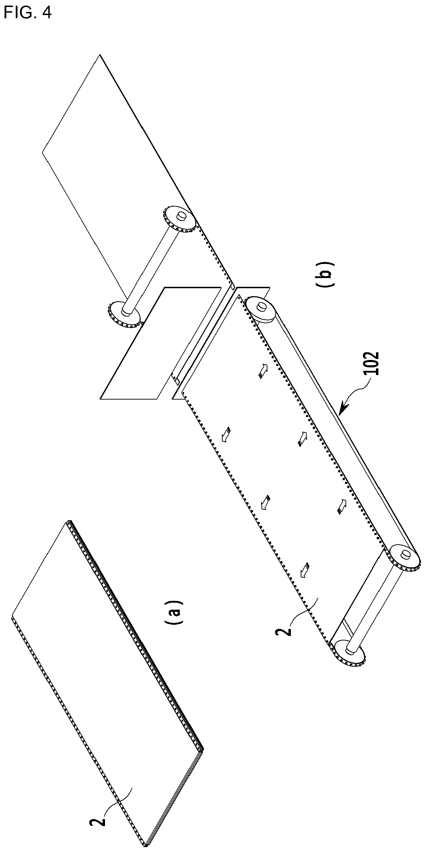

FIG. 1 and FIG. 2 are schematic diagrams illustrating a whole part of an electrostatic metal porous body forming apparatus 1 based on a binder supplier according to an exemplary embodiment. FIG. 3(a) to (c) are a top plan view of a sheet-like porous body substrate, a cross-sectional side view thereof, and an enlarged view of an edge portion thereof, respectively, according to an exemplary embodiment. FIG. 4 (a) is a schematic view of a sheet-like porous body substrate according to an exemplary embodiment, and FIG. 4 (b) is a schematic view illustrating the sheet-like porous body substrate that is fixed by a substrate supporter.

Hereinafter, a configuration thereof will be described in detail with reference to FIG. 1 to FIG. 4.

Referring to FIG. 1 and FIG. 2, the electrostatic metal porous body forming apparatus 1 according to the present exemplary embodiment may include a transfer module 100 for transferring a porous body substrate 2 into the electrostatic metal porous body forming apparatus 1.

The porous body substrate 2 transferred by the transfer module 100 may have an open foam shape such as a 3D network structure shape or a honeycomb shape. For example, the porous body substrate 2 may include one or more of polyurethane (PU) foam, polyurea foam, polyurethane (PU) foam coated with nickel, nickel foam, nickel foam coated with iron, or nickel-polyurethane (PU) foam coated with iron. Referring to FIG. 3 and FIG. 4, opposite sides of the porous body substrate 2 are pressed to obtain a constant width, and the porous body substrate 2 may have a shape in which a plurality of pores are disposed at a regular distance. The pores regularly disposed on pressed opposite side surfaces may be attached to and detached from a substrate supporter 102 of the transfer module 100. Accordingly, it is possible to easily control the process in a unit of sheet. However, the shape of the porous body substrate 2 is not limited thereto.

Referring to FIG. 1 and FIG. 2, the transfer module 100 may include the substrate supporter 102, and the substrate supporter 102 may stably secure the porous body substrate 2 while the porous body substrate 2 is transferred by the transfer module 100.

For example, referring to FIG. 4, the substrate supporter 102 may have a belt shape that includes a plurality of teeth. However, the shape of the substrate supporter 102 is not limited to the belt shape including the teeth. The substrate supporter 102 may have any shape capable of stably securing the porous body substrate 2, and controlling sheet-unit transferring and being attachable and detachable. In this case, when opposite sides of the porous body substrate 2 are pressed to obtain the constant width, the teeth of the porous body substrate 2 are engaged with the pores to stably secure the porous body substrate 2. In this case, longitudinal tension stress that may be applied to the porous body substrate 2, generated during the process, may be reduced, movement control of accurate distances may be facilitated, operating time may be reduced, and defective products may be easily removed. Further, devices may be individually used to facilitate expansion, opening, and management thereof, and may be efficiently managed by, e.g., granting IDs for each sheet. The substrate supporter 102 may be disposed in parallel with the ground, and the porous body substrate 2 secured by the substrate supporter 102 may stably maintain the parallel state with the ground. As such, in the case that the porous body substrate 2 secured by the substrate supporter 102 stably maintains the parallel state with the ground, in the coating process, it is possible to prevent coating densities between upper and lower portions of the porous body substrate 2 from being non-uniform and reduce binder or metal powder that is wasted.

Further, the transfer module 100 may include a roller unit 101 that transfers power through rotation to move the substrate supporter 102.

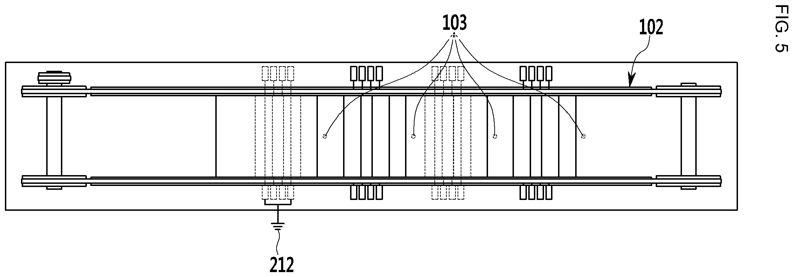

FIG. 5 is a schematic diagram illustrating a substrate supporter and a transfer sensor in a transfer module according to an exemplary embodiment.

Referring to FIG. 5, the transfer module 100 may include a transfer sensor 103 that can control the transfer of the porous body substrate 2 depending on a moving direction and a speed of the substrate supporter 102. The transfer sensor 10 may include a plurality of transfer sensors in a moving path of the porous body substrate 2, and may be fixed to an upper portion or a lower portion of the substrate supporter. The transfer sensor 103 may sense a position and a speed of the porous body substrate 2 on the substrate supporter 102, and thus may be used for efficient management of entire processes and process automation.

Referring to FIG. 1 and FIG. 2, according to the present exemplary embodiment, the electrostatic metal porous body forming apparatus 1 may include a coating module 200 which is a configuration set that is directly related to the coating process, and the coating module 200 may include an electrifier 210. The electrifier 210 may electrify one or more of the metal powder and the binder which are coated on the porous body substrate 2, and may apply a coating voltage for coating one or more of the metal powder and the binder on the porous body substrate 2.

The electrifier 210 may include a first electrode 213 for generating an electric field by which one or more of the metal powder and the binder can be electrified. The first electrode 213 may be disposed on a moving path of the metal powder or the binder before the metal powder or the binder that is injected is coated on the porous body substrate 2 in order to electrify the metal powder or binder particles. For example, the electrification of the metal powder or the binder particles by the first electrode 213 of the electrifier 210 may be performed by employing one or more of a corona method, a method using an ion implanter, and a method using a plasma ionizer. For example, an electrostatic precipitator employing the corona method may use a DC high voltage, and may generate an appropriate non-uniform electric field with a dust-collecting electrode as a positive electrode and a discharge electrode as a negative electrode.

The electrostatic precipitator employing the corona method serves to apply charges to dust particles in a gas by using a corona discharge in order to separate and collect thus-electrified particles in the dust-collecting electrode by using a Coulomb force. The corona discharge is divided into positive (+) corona discharge and negative (-) corona discharge, and the negative corona discharge has a lower corona discharge starting voltage and a higher spark discharge starting voltage than that of the positive corona discharge, and has stability.

Accordingly, the negative corona discharge can allow more corona current to flow and can accomplish larger electric field. As a result, a general industrial electric precipitator employs the negative corona discharge. Positive ions and negative ions generated by the negative corona discharge move toward opposite polarities, respectively. In this case, an ionized region is limited to around a discharge electrode, i.e., the negative (-) electrode, and thus the positive ions have a short-distance operation while the negative ions have a long-distance operation. Accordingly, most dust particles are electrified as negative ions to move to a positive (+) electrode, and thus the positive electrode is called a plate electrode or a cylinder-shaped electrode. Further, the discharge electrode serving as a negative electrode may emit electrons for continuous discharge. The dust particles may be electrified by using collision electrification and diffusion electrification. According to the collision electrification, ions obtain energy by an electric field and collide with the dust particles to electrify the dust particles. Further, according to the diffusion electrification, ions of gases are diffused by irregular thermal movement based on the kinetic theory of gases to be attached thereon, thereby being electrified. The dust particles moved to the electrode are attached onto the electrode surface to be collected, and are separated or cleaned for dust collection.

At least one of the first electrode 213 and a second electrode 214 is of a wire type. The wire-type electrodes 213 and 214 may generate a uniform density of electric field as compared with needle-type electrodes such that the metal powder or the binder may be electrified with a constant charge amount and may be uniformly coated. Further, the electrodes 213 and 214 may have a shape capable of facilitating replacement. For example, when the electrodes 213 and 214 are repeatedly used, the electrified particles may be absorbed to deteriorate discharge efficiency or surface corrosion may occur due to attachment of the injected binder. As a result, the electrodes 213 and 214 need replacement at an adequate cycle, and thus the electrodes 213 and 214 may have shapes capable of facilitating attachment and detachment. For example, when the electrodes 213 and 214 are of a wire type and are configured together with a member such as a roller, automatic or manual replacement of the electrodes 213 and 214 can be easily performed.

The electrifier 210 may include a first power supplier 211 for supplying electric power to the first electrode 213. The first power supplier 211 may be connected with the first electrode 213 through a conductive material, and electricity generated from the first power supplier 211 may be transferred to the first electrode 213 through the conductive material. Accordingly, for example, the first electrode 213 may generate a negative electric field such that the metal powder or the binder may be electrified with a negative charge. A voltage applied to the first electrode 213 may be in a range of about 10 to 150 kV. Within the voltage range, a current amount may be automatically adjusted depending on a distance between the first electrode 213 and the porous body substrate 2 to minimize power consumption and maximize an electrostatic effect for coating.

Further, the electrifier 210 may include the second electrode 214 disposed to face the first electrode 213 to have an opposite charge to the first electrode 213. The electrifier 210 may be connected with the second electrode 214, and may include a second power supplier 212 for supplying power which can electrify the porous body substrate 2 as an opposite charge to the first electrode 213. The second power supplier 212 may allow the electrified metal powder or binder to be effectively coated on the porous body substrate 2 through an electrostatic force by supplying electricity of the opposite charge to the first electrode 213. The power supplied from the second power supplier 212 may be transferred to the second electrode 214 disposed at an upper or lower portion of the substrate supporter 102 or may be directly transferred to the porous body substrate 2, to apply a voltage. For example, the electricity transferred from the second power supplier 212 may be positive charges, and the second electrode 214 disposed at the upper or lower portion of the substrate supporter 102 may be a wire-type electrode or a plate or cylinder-shaped dust-collecting electrode.

The voltage applied to the first or second electrode by the first power supplier 211 or the second power supplier 212 may be of a pulse type. In electrostatic coating of the metal powder on the porous body substrate 2, each edge portion of a porous body structure may have an electric field density that is increased as compared with pore portions, and thus an attractive force toward the edge portions may be increased to obstruct the passage of the electrified particles through the pore portions. In this case, irregular movement of the metal powder in the porous body substrate 2 may obstruct effective movement into the porous body substrate 2. This may be referred to as a Faraday cage effect. When the voltage applied by the first power supplier 211 or the second power supplier 212 has a pulse form, an inertial movement of particles by electric field acceleration may be instantly blocked to increase an inertial movement of gas flow. This may suppress the Faraday cage effect of particles. In this case, the pulse-type voltage may be repeated for a short time, and thus kinetic energy of the metal powder or the binder may not be significantly reduced and electrification of negative charges may be continuously performed.

Referring to FIG. 1 and FIG. 2, the coating module 200 may include a metal powder supplier 230. Accordingly, the coating module 200 may coat metal powder on the porous body substrate 2 transferred by the transfer module 100.

A metal of the metal powder may be any one single element selected from among a metal having conductivity, or may include one or more of their alloys (including a solid solution). For example, the metal of the metal powder may include at least one element selected from among iron (Fe), chrome (Cr), nickel (Ni), cobalt (Co), platinum (Pt), palladium (Pd), gold (Au), silver (Ag), and barium (Ba) or one or more of their alloys (including a solid solution). An average particle size of the metal powder may be in a range of about 100 nm to 1 mm. When the average particle size is about 100 nm or more, the metal powder may have a sufficient charge amount for coating using electricity. When the average particle size is about 1 mm or less, the metal powder may be smoothly moved and it is possible to minimize non-uniformity of a coating layer generated by aggregation of the metal powder.

The metal powder supplier 230 may include a metal powder vessel 235 for storing the metal powder and a gas fluidifying device 237 disposed to be connected with the metal powder to be capable of mutual movement. The gas fluidifying device 237 may be disposed between the metal powder vessel 235 and an outlet 231 for directly injecting the metal powder to the outside. By using the gas fluidifying device 237, it is possible to improve flowability of the metal powder particles supplied toward the outlet 231 and to continuously supply metal powder of a uniform particle size. For example, the metal powder moved from the metal powder vessel 235 may be dried by generating a flow of a dried inert gas such as nitrogen gas from a lower end of the gas fluidifying device 237 in order to improve the metal powder flowability.

The metal powder supplier 230 may include the outlet 231 for directly injecting the metal powder to the outside. For example, the outlet 231 may be a nozzle. The outlet 231 may include one or more outlets. Further, the metal powder supplier 231 may include a cover 233. For example, the cover 233 may be a canopy. The cover 233 may have such a shape so as to surround the outlet 231 or such a shape so as to be separated from an opposite surface to a coated surface of the porous body substrate 2. The cover 233 may serve to prevent waste of the metal powder injected from the outlet 231 to the outside thereof, and facilitate recovering the metal powder that is not coated on the porous body substrate 2.

The outlet 231 of the metal powder supplier 230 may be separately disposed above an upper surface of the substrate supporter 102 or below a lower surface thereof. For example, the porous body substrate 2 may be moved by movement of the substrate supporter 102. In this case, the outlet 231 may be separately disposed in the moving substrate supporter 102 and above an upper surface of the porous body substrate 2 that is moved by being fixed to the substrate supporter 102 or below a lower surface thereof. Accordingly, the metal powder injected from the outlet 231 may be continuously coated on the upper or lower surface of the porous body substrate 2. Referring to FIG. 2, the outlet 231 may be disposed below the substrate supporter 102 as well as above the substrate supporter 102. Accordingly, coating may be simultaneously performed on the upper surface and the lower surface of the porous body substrate 2 in one process. The outlets 231 of the metal powder suppliers 230 disposed above and below the substrate supporter 102 may ameliorate non-uniform coating on a surface of the porous body substrate 2. The coating may be performed a plurality of times in one process by using the plurality of metal powder suppliers 230. The outlets 231 and the first electrode 213 may be moved in one or more of vertical, horizontal, front, and rear directions. Accordingly, it is possible to finely and uniformly control a thickness of a metal layer coated on the porous body substrate 2.

Hereinafter, a process of coating a metal powder on the porous body substrate 2 by the metal powder supplier 230 will be simply described. For example, first, the metal powder stored in the metal powder vessel 235 may be introduced into the gas fluidifying device 237. Next, the metal powder which has a constant particle size and improved flowability by the gas fluidifying device 237 may be moved through a passage member. The metal powder may be injected through the outlet 231 which is separately disposed above an upper surface of the substrate supporter 102 or below a lower surface thereof. In this case, an inert gas such as nitrogen gas supplied from a gas supplier 236 may be heated by a heater 234 and forms a mixed flow together with a flow of the metal powder to be injected to the outlet 231. Accordingly, activity of the metal powder particles may be increased, and electrification and attaching efficiency of the metal powder may be increased.

Next, the metal powder injected from the outlet 231 may be electrified with a constant charge by the first electrode 213. Next, the electrified metal powder may be coated on the porous body substrate 2 by gravity and an electrostatic force. In this case, the electrostatic force may be generated on an opposite surface to a coated surface of the porous body substrate 2, and between charges electrified through the second power supplier 212 and opposite charges thereto. In this case, since no strong positive pressure gas flow is used, an amount of wasted metal powder may be minimized, and the metal flow may be uniformly coated on the surface or the inside of the porous body substrate 2 by the generated electric field. In this case, some of the metal powder arriving at the porous body substrate 2 or metal powder particles that are not sufficiently electrified may collide with the surface of the porous body substrate 2 to leak to the outside. Accordingly, it is possible to minimize an amount of the leaking metal powder and stably coat the metal powder on the porous body substrate 2 by using a negative pressure gas flow applied to the opposite surface to the coated surface of the porous body substrate 2. For example, the negative pressure gas flow may be generated by using a vacuum generator 232 of the metal powder supplier 230. For example, the vacuum generator 232 may be an absorbing fan. A gas of the negative pressure gas flow may be dried nitrogen gas or another inert gas.

Referring to FIG. 1, the coating module 200 may include a binder supplier 220. Accordingly, the binder may be coated on the porous body substrate 2 transferred by the transfer module 100.

The binder is uniformly coated on the surface or the inside of the porous body substrate 2 before coating of the metal powder to facilitate more uniform and stable coating of the metal powder on the surface or the inside of the porous body substrate 2. Examples of binder may include one or more of polyvinyl alcohol, polyacetal, polyethylene, polyethylenimine, polyethylene glycol, polypropylene, paraffin wax, carbon wax, chitosan, cellulose derivative, starch derivative, sugar derivative, polyethylene oxide, carrageenan, alginate, gum karaya, xanthan gum, guar gum, gelatin, algin, tragacanth gum, acrylamide polymer, Carbopol, polyamine, a polyquaternary compound, polyvinyl pyrrolidone, or a polyhydroxy compound.

The binder supplier 220 may store the binder, and may include a binder solution vessel 225 for transferring the binder to the outlet 221 through which the binder is injected. The binder supplier 220 may include an outlet 221 through which the binder is directly injected to the outside. For example, the outlet 221 may be a nozzle. The outlet 221 may include one or more outlets. Further, the binder supplier 220 may include a cover 223. For example, the cover 223 may be a canopy. The cover 223 may have such a shape so as to surround the outlet 221 or such a shape so as to be separated from an opposite surface to a coated surface of the porous body substrate 2. The cover 223 may serve to prevent leakage of the metal powder injected from the outlet 221 to the outside thereof, and facilitate recovering the metal powder that is not coated on the porous body substrate 2.

The outlet 221 of the binder supplier 220 may be separately disposed above an upper surface of the substrate supporter 102 or below a lower surface thereof. For example, the porous body substrate 2 may be moved by movement of the substrate supporter 102. In this case, the outlet 231 may be separately disposed in the moving substrate supporter 102 and above an upper surface of the porous body substrate 2 that is moved by being fixed to the substrate supporter 102 or below a lower surface thereof. Accordingly, the metal powder injected from the outlet 231 may be continuously coated on the upper or lower surface of the porous body substrate 2. Further, referring to FIG. 1, the outlet 221 may be disposed below the substrate supporter 102 as well as above the substrate supporter 102. Accordingly, coating may be simultaneously performed on the upper surface and the lower surface of the porous body substrate 2 in one process. The outlets 221 disposed above and below the substrate supporter 102 may ameliorate non-uniform coating on a surface of the porous body substrate 2. The coating may be performed a plurality of times in one process by using a plurality of binder suppliers 220. The outlets 221 and the first electrode 213 may be moved in one or more of vertical, horizontal, front, and rear directions. Accordingly, it is possible to finely and uniformly control a thickness of a metal layer coated on the porous body substrate 2.

Hereinafter, a process of coating binder on the porous body substrate 2 by the binder supplier 220 will be simply described. For example, first, the binder stored in the binder solution vessel 225 may be moved through a passage member, and may be injected through the outlet 221 which is separately disposed above an upper surface of the substrate supporter 102 or below a lower surface thereof. In this case, a heater 224 disposed on a moving path of the moving binder may heat the binder flow to maintain liquidity of the binder. In this case, an inert gas such as nitrogen gas supplied from a gas supplier 226 may be heated by the heater 224 and forms a mixed flow together with a flow of the metal powder to be injected to the outlet 221. Accordingly, activity of the binder particles may be increased, and electrification and attaching efficiency of the binder may be increased.

Next, the binder injected from the outlet 221 may be electrified with a constant charge by the first electrode 213. Subsequently, the electrified binder may be coated on the porous body substrate 2 by gravity and an electrostatic force that is generated on an opposite surface to a coated surface of the porous body substrate 2 and between charges electrified through the second power supplier 212 and opposite charges thereto. In this case, since no strong positive pressure gas flow is used, an amount of wasted metal powder may be minimized, and the metal flow may be uniformly coated on the surface or the inside of the porous body substrate 2 by the generated electric field. In this case, some of the metal powder arriving at the porous body substrate 2 or metal powder particles that are not sufficiently electrified may leak to the outside of the surface of the porous body substrate 2. Accordingly, it is possible to minimize an amount of the leaking metal powder and stably coat the binder on the porous body substrate 2 by using a negative pressure gas flow applied to the opposite surface to the coated surface of the porous body substrate 2

For example, the negative pressure gas flow may be generated by using a vacuum generator 222 of the metal powder supplier 230. For example, the vacuum generator 222 may be an absorbing fan. A gas of the negative pressure gas flow may be a dried nitrogen gas or another inert gas. However, the coating of the binder is not limited thereto, but may be performed by spraying, dipping, bar coating, or the like.

According to an exemplary embodiment, the coating module 200 of the electrostatic metal porous body forming apparatus 1 may include the metal powder supplier 230 exclusively, or may include the metal powder supplier 230 and the binder supplier 220. When the coating module 200 includes the metal powder supplier 230 and the binder supplier 220, the metal powder to be coated on the porous body substrate 2 may be more efficiently uniformly dispersed and coated. When the coating module 200 includes the metal powder supplier 230 and the binder supplier 220, the binder supplier 220 of the coating module 200 may be disposed before the metal powder supplier 230, or before and after the metal powder supplier 230 based on steps of the metal porous body forming process.

Referring to FIG. 1 and FIG. 2, the coating module 200 may include a circulator 240 for re-circulating and re-using the metal powder or binder that is not coated, in the coating step.

First, a re-circulating or re-using operation of the metal powder will be described with reference to FIG. 2. When the metal powder injected from the outlet 231 of the metal powder supplier 230 is not effectively coated on the porous body substrate 2, the metal powder that is not coated may be collected by the cover 233 that may be disposed on a rear surface to be coated. Next, the metal powder that is not coated may be collected and recovered by passing through a cyclone 243 and a filter 242. Subsequently, the metal powder may be moved to the metal powder vessel 235 for re-use. In this case, the movement of the metal powder may be performed by using a negative pressure gas flow, and the negative pressure gas flow may be generated by the vacuum generator 232. For example, the vacuum generator 232 may be an absorbing fan. A magnitude of the negative pressure of the vacuum generator 232 and a gas type may be determined identically as in the coating of the metal powder.

A re-circulating or re-using operation of the binder will be described with reference to FIG. 1. When the binder injected from the outlet 221 of the binder supplier 220 is not effectively coated on the porous body substrate 2, the binder that is not coated may be collected by the cover 223 that may be disposed on a rear surface of the porous body substrate 2 to be coated. Next, the collected binder may be moved to the binder solution vessel 225 by using a binder recovering pump 241 and the vacuum generator 222 of the binder supplier 200 for re-circulation and re-use. For example, the vacuum generator 222 may include an absorbing fan. In this case, the movement of the binder may be performed by using a negative pressure gas flow, and the negative pressure gas flow may be generated by using at least one of the vacuum generator 222 and the binder recovering pump 241. A magnitude of the negative pressure of the vacuum generator 222 and a gas type may be determined identically as in the coating of the binder.

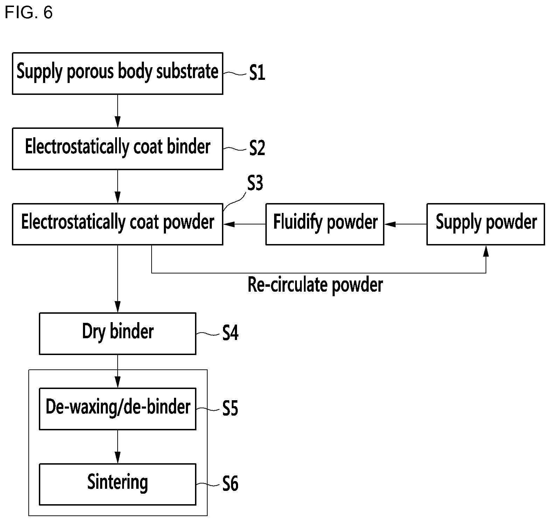

FIG. 6 is a flowchart illustrating an electrostatic metal porous body forming method according to an exemplary embodiment.

Hereinafter, an electrostatic metal porous body forming method according to an exemplary embodiment will be described with examples with reference to FIG. 6. Some duplicate descriptions will be omitted.

First, the porous body substrate 2 is moved by the substrate supporter 102 of the transfer module 100 to be supplied to the electrostatic metal porous body forming apparatus 1 (S1).

Next, the binder is coated on the porous body substrate 2 disposed on the substrate supporter 102 through the binder supplier 200 (S2). In this case, the coating of the binder may be electrostatically performed, or may be performed by spraying, dipping, bar coating, or the like without electrifying binder particles. This step S2 may be omitted. The electrostatic coating may be performed by using the same method as that of the metal powder coating (S3) to be described below. Detailed description of the binder electrostatic coating has been given in the description of the binder supplier 220. Further, the binder that is not coated in one circulating process may be additionally and repeatedly recovered for re-circulation or re-use.

Next, the metal powder may be electrostatically coated on the porous body substrate 2 disposed in the substrate supporter 102 through the metal powder supplier 230 (S3). Detailed description of electrostatically coating the metal powder is the same as described above, and thus is omitted. In this case, the metal powder that is not coated in one circulating process may be additionally and repeatedly recovered for re-circulation or re-use.

Next, the metal porous body coated with the binder and the metal powder is dried (S4). Accordingly, the liquid binder may be cured to fix the uniformly dispersed and coated metal powder.

Next, a de-waxing/de-binder operation is performed (S5). In step S5, a wax or binder other than the metal powder may be removed, and this may be performed by using a solvent treatment or a heat treatment.

Next, a sintering operation (S6) is performed for a high temperature treatment for improving a combining force between the metal powder particles and between the metal powder particles and the porous body substrate 2.

The de-waxing/de-binder operation (S5) and the sintering operation (S6) may be performed in a vacuum reactor of a continuous disposition type.

Hereinafter, the present invention will be described in more detail with reference to examples, but the following examples are only examples of the present invention and the present invention is not limited to the following examples.

### <Example 1> Manufacturing metal porous body

First, an Fe foam sheet substrate having a size of about 1520 mm x 300 mm x 1.9 mm and an average pore size of about 580 µm is prepared. Each foam sheet has a shape in which opposite horizontal edges are pressed, and each thickness of the pressed edges is about 2 mm. Further, the pressed portions of each foam sheet are formed to have a vertical width of about 10 mm from the horizontal opposite edges, and several pores are formed in the pressed portions at an interval of 10 mm. Each of the pores has a diameter of about 5 mm. This facilitates precise pitch transfer of the foam sheets and stable maintenance of the plane that is parallel with the ground.

Next, the Fe foam sheet substrate is fixed to the substrate supporter, and a transfer module enters the apparatus.

Subsequently, polyethylenimine is coated on each Fe foam sheet substrate transferred by the transfer module by using the binder supplier. The Fe foam sheet substrates coated with the binder are continuously moved in a forward direction by the transfer module. Successively, Fe alloy powder to be coated is electrified with a negative charge and injected onto the Fe foam sheet substrates. The Fe foam sheet substrates coated with the binder and the metal powder are transferred to the outside of the apparatus. Successively, drying, de-waxing, and de-binder operations, and sintering, may be performed in order.

Resultantly, a metal porous body in which an Fe alloy powder is uniformly sintered on the surface of the inside of the foam sheet substrates is produced.

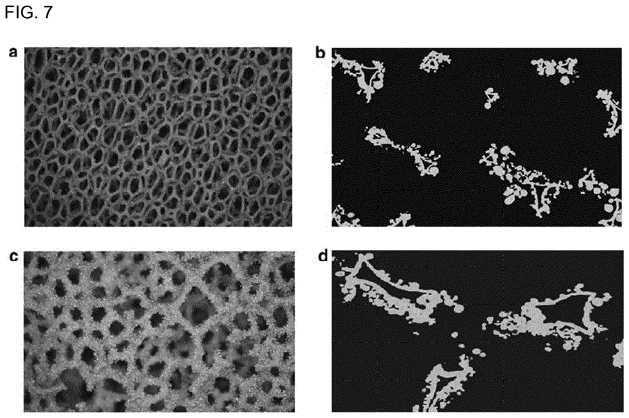

FIG. 7 a to d are enlarged photographs illustrating a metal porous body manufactured by an electrostatic metal porous body forming apparatus and photographs illustrating an incision surface according to an exemplary embodiment.

As shown in FIG. 7 a to d, Fe alloy powder is uniformly formed on the surface of the Fe foam sheet substrate.

### <Example 2> Manufacturing metal porous body

A metal porous body is manufactured by using the same method as Example 1, except for using a foam sheet substrate with a thickness of about 3.0 mm and a Ni foam sheet with an average pore size of about 1200 µm.

FIG. 7c is an enlarged photograph of a metal porous body manufactured in Example 2, and FIG. 7d is a photograph of an incision surface of the metal porous body manufactured in Example 2.

As a result, the Fe alloy powder is uniformly formed on the surface of the Ni foam sheet substrate.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. An electrostatic metal porous body forming apparatus, comprising:
a transfer module transferring a porous body substrate; and
a coating module coating a metal powder on the porous body substrate,
wherein the transfer module includes a substrate supporter fixing the porous body substrate while the porous body substrate is transferred, and
wherein the coating module includes:
an electrifier including a first electrode electrifying the metal powder, a second electrode facing the first electrode, a first power supplier connected with the first electrode supplying electricity to the first electrode, and a second power supplier connected with the second electrode supplying electricity electrified with an opposite charge to a charge caused by the electrification of the first electrode to the second electrode, and generating a pulse type of voltage; and
a metal powder supplier including a metal powder vessel storing the metal powder therein and supplying the metal powder to the outside, and an outlet separately disposed above or below the porous body substrate injecting the metal powder, and transferring or injecting the metal powder that is electrified and coated by the electrifier.

2. The electrostatic metal porous body forming apparatus of claim 1, wherein the coating module includes a binder supplier coating a binder on the porous body substrate, and
the binder supplier includes:
a binder solution vessel storing the binder therein and supplying the binder to the outside; and
an outlet separately disposed above or below the porous body substrate injecting the binder.

3. The electrostatic metal porous body forming apparatus of claim 2, wherein the coating module includes an electrifier including a first electrode electrifying the binder, a second electrode facing the first electrode, a first power supplier connected with the first electrode supplying electricity to the first electrode, and a second power supplier connected with the second electrode supplying electricity electrified with an opposite charge to a charge caused by the electrification of the first electrode.

4. The electrostatic metal porous body forming apparatus of any one of claims 1 to 3, wherein the outlet includes:
a first outlet separately disposed above the porous body substrate transferred by the substrate supporter, and the porous body substrate providing a coated surface; and
a second outlet separately disposed below the porous body substrate transferred by the substrate supporter, and the porous body substrate providing a coated surface.

5. The electrostatic metal porous body forming apparatus of any one of claims 1 to 3, wherein the coating module includes a vacuum generator generating a negative pressure gas flow.

6. The electrostatic metal porous body forming apparatus of claim 1, wherein the transfer module includes a transfer sensor disposed on a transfer path of the porous body substrate, and the transfer sensor controls transfer of the porous body substrate.

7. The electrostatic metal porous body forming apparatus of claim 1, wherein the porous body substrate includes an open cell type foam having a 3D network structure or a honeycomb structure.

8. The electrostatic metal porous body forming apparatus of claim 1, wherein the metal powder supplier includes:
a gas supplier supplying a gas that is mixed in a flow of the metal powder supplied from the metal powder vessel; and
a heater heating the gas supplied from the gas supplier.

9. The electrostatic metal porous body forming apparatus of claim 2 or 3, wherein the binder supplier includes:
a gas supplier supplying a gas that is mixed in a flow of the binder supplied from the binder solution vessel; and
a heater heating the flow of the binder or the gas supplied from the gas supplier.

10. The electrostatic metal porous body forming apparatus of claim 1, wherein
the metal powder supplier includes a cover surrounding the outlet or being separated from an opposite surface to a coated surface of the porous body substrate to prevent leakage of the metal powder to the outside.

11. The electrostatic metal porous body forming apparatus of claim 2 or 3,
the binder supplier includes a cover surrounding the outlet or being separated from an opposite surface to a coated surface of the porous body substrate to prevent leakage of the binder to the outside.

12. The electrostatic metal porous body forming apparatus of claim 1, wherein the electrodes are of a wire type.

13. The electrostatic metal porous body forming apparatus of claim 1, wherein the metal powder supplier includes a gas fluidifying device disposed between the metal powder vessel and the outlet fluidifying the metal powder supplied from the metal powder vessel.

14. The electrostatic metal porous body forming apparatus of any one of claims 1 to 3, wherein the coating module includes a circulator including a cyclone and a filter recovering the metal powder that is not coated.

15. The electrostatic metal porous body forming apparatus of claim 2 or 3, wherein the coating module includes a circulator including a binder recovering pump providing a pressure for recovering the binder that is not coated.

16. An electrostatic metal porous body forming method comprising:
supplying a porous body substrate to an inside of the electrostatic metal porous body forming apparatus;
electrifying a metal powder under an electric field; and
coating the electrified metal powder on the porous body substrate supplied from the electrostatic metal porous body forming apparatus by applying a pulse type of voltage.

17. The electrostatic metal porous body forming method of claim 16, further comprising
coating a binder on the porous body substrate, before coating the metal powder on the porous body substrate.

18. The electrostatic metal porous body forming method of claim 17, further comprising
electrifying the binder under an electric field, before coating the binder on the porous body substrate,
wherein the coating of the binder on the porous body substrate includes coating the electrified binder on the porous body substrate by applying a voltage.

19. The electrostatic metal porous body forming method of any one of claims 16 to 18, wherein the electric field is generated around an electrode by electricity supplied from a first power supplier, and
a voltage magnitude of the electricity is in a range of 10 to 150 kV.

20. The electrostatic metal porous body forming method of any one of claims 16 to 18, wherein electrification of at least one of the metal powder and the binder is performed by using a corona method, a method using an ion implanter, or a method using a plasma ionizer.
